# EUROPEAN PATENT SPECIFICATION

(11) **EP 0 416 779 B1**
(45) Date of publication and mention of the grant of the patent: **08.12.1993**
(21) Application number: 90309242.7
(22) Date of filing: 23.08.1990
(51) Int. Cl.: C03B 9/453, C03B 35/10

(54) **Pusher Mechanism for glass forming machine**
Abstreifer für eine Glasformmaschine
Bras-poussoir pour une machine façonnant du verre

(30) Priority: 05.09.1989 US 402956
(43) Date of publication of application: 13.03.1991
(73) Proprietor: Emhart Glass Machinery Investments Inc., Wilmington, Delaware 19801 (US)
(72) Inventor: Voisine, Gary R., S.Windsor, Connecticut 06074 (US)
(74) Representative: Wetters, Basil David Peter

(56) References cited:
- FR-A- 2 531 420
- US-A- 3 249 201
- US-A- 4 162 911

## Description

The present invention relates to machinery for manufacturing glass containers, and specifically, to pusher mechanisms which transfer glass containers deposited on a dead plate of an individual section machine to a moving conveyor which will deliver the containers to a Lehr.

In known pusher mechanisms, a pneumatic cylinder extends a container handling arm, having a plurality of L-shaped pockets, to a container receiving location. Formed containers are deposited proximate these pockets on a dead plate and in some such mechanisms air under pressure is directed toward the containers by a pocket air distributor secured to the dead plate opposite the container handling arm to blow the containers fully into their pockets (see e.g. FR-A-2 531 420).

It is an object of the present invention to provide a pusher mechanism in which the containers are rapidly located in their pockets and are maintained so located during rotational displacement of the pusher mechanism as it transfers the containers from the, dead plate to the conveyor.

The present invention provides a pusher mechanism for transferring a selected number of containers from a dead plate of a glass forming machine to a conveyor comprising
a container handling arm including a corresponding number of pockets each having a container engaging corner
means for displacing said container handling arm from a retracted position to an advanced, container receiving, position and for displacing said advanced container handling arm from said receiving position through an arc to a deposit position at which containers are transferred to the conveyor
characterized in that the pusher mechanism comprises conduit means displaceable with the container handling arm and associated with each pocket each conduit means being selectively aimed to direct air discharged therefrom toward the corner of the associated pocket, and
means for supplying air under pressure to said conduit means when a container is in the corner of the associated pocket.

There now follows a description, to be read with reference to the accompanying drawings, of a preferred embodiment of the invention chosen to illustrate it by way of example.

Referring to the drawings.
Figure 1 is a schematic showing of a pusher mechanism;
Figure 2 is an oblique view of a container receiving pocket illustrated in Figure 1;
   and
Figure 3 is a schematic showing of an alternate arrangement for supplying air to a pusher mechanism.

A pusher mechanism for a multi-gob individual section glass forming machine operates to transfer a selected number of containers 10 (here three) deposited on a dead plate 12 to a conveyor 60. Prior to placement of the containers on the dead plate 12, a container handling arm 14 which has correspondingly three U shaped pockets 16 each having a container engaging corner (there could be 1, 2, 3 or 4 such pockets) is moved to an advanced container receiving position from a retracted position. The arm 14 is secured to a rod 18 of a extend/retract pneumatic cylinder 20 which is extended to the container receiving position by connecting extend air having a selected pressure P1 to the cylinder to displace a piston 22, and hence, rod 18. (Two-position selector switch S which is controlled by a machine controller 24 is set to one position connecting extend air P1 via extend air line 23 to the cylinder 20). Generally, this pressure, which can be adjusted by changing the setting of a needle valve N is low (15 psi, for example) so that piston advance will be slow. When the container handling arm 14 is fully advanced, the controller 24 switches the selector switch S to its second position connecting a second pressure source P2 (pocket air) to the extend line 23. This second pressure P2 is substantially higher (45 psi, for example) than extend air pressure and can also be adjusted via a second needle valve N.

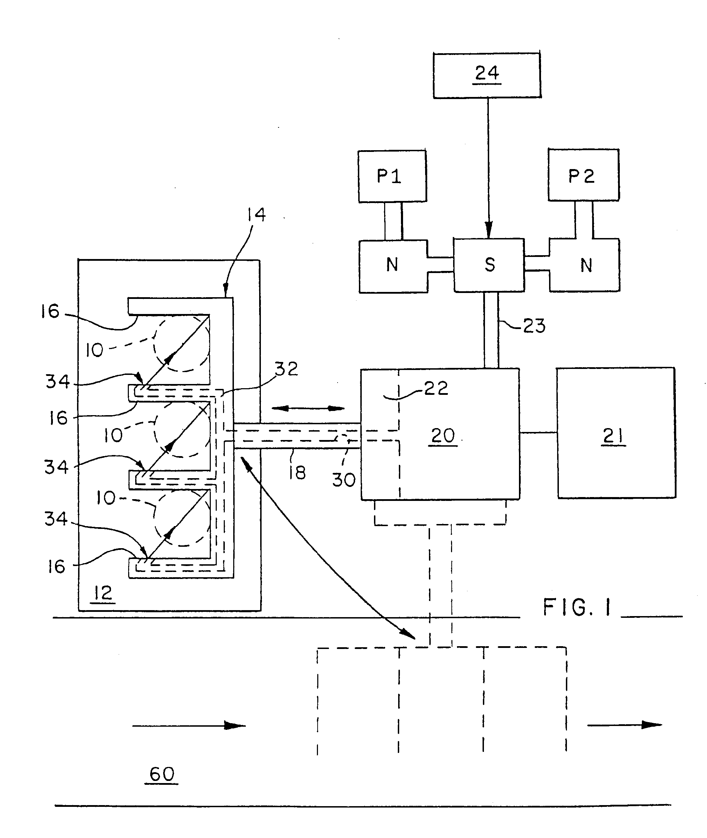

The pusher mechanism also comprises rotating means 21 which moves the container handling arm 14 from its container receiving position through an arc to a deposit position (shown in dotted lines in Figure 1) at which the containers are transferred to the conveyor 60.

A conduit 30 extends through the piston 22 and rod 18, and communicates via a conduit 31 with upper and lower air conduits 32 which are drilled into side walls 38 and rear walls 39 of the pockets 16. These conduits deliver air (either at extend pressure or pocket air pressure) to cylindrical openings 34 in the pocket side walls 38 which are aimed horizontally at the opposite corner of the pocket. Since these openings are small and the pressure is high, air will be discharged at a velocity high enough to locate the container fully in its pocket. The conduits 30, 31, 32 may be substantially larger in cross section than the cylindrical opening 34 to assure uniform pressure at these openings. Such locating of a container is assisted by the continuous surface of its U-shaped pocket. Pocket air will be turned on when the piston 22 is fully advanced and turned off before completion of swinging movement of the arm 14 through an arc to the deposit position to effect transfer of the containers to the conveyor 60.

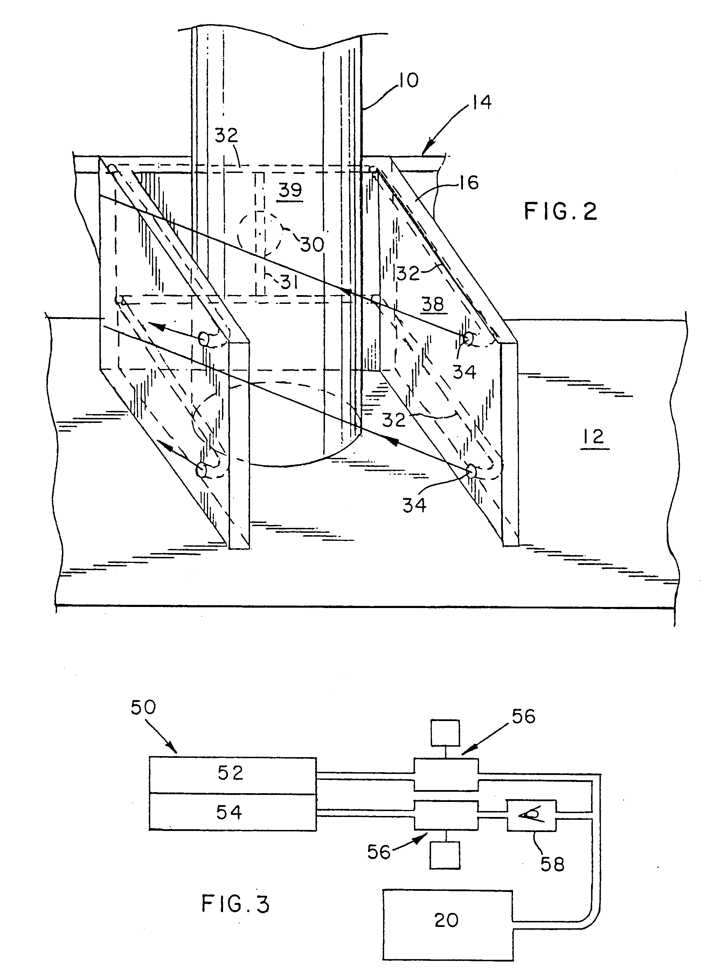

In an alternate arrangement (Figure 3), air under pressure supplied from a single source is distributed by a distribution rack 50 having connections 52 and 54 to an extend air line and a pocket air line respectively. Both lines have a needle valve 56 to reduce the pressure as desired and the pocket air line additionally includes a check valve 58 since it is open to exhaust when extend air is applied.

In many pusher mechanisms installed in glass machines the pockets 16 of the handling arm 14 are staggered, that is to say rear walls 39 of the pockets are progressively stepped rather than in line as shown in Figure 1. The arrangement described above is particularly useful with a mechanism with such staggered pockets.

## Claims

1. A pusher mechanism for transferring a selected number of containers (10) from a dead plate (12) of a glass forming machine to a conveyor (60) comprising
a container handling arm (14) including a corresponding number of pockets (16) each having a container engaging corner
means (P1,N,S,23,18,20,22;21) for displacing said container handling arm (14) from a retracted position to an advanced container receiving position and for displacing said advanced container handling arm from said receiving position through an arc to a deposit position at which containers are transferred to the conveyor
characterized in that the pusher mechanism comprises conduit means (30, 32, 34) displaceable with the container handling arm and associated with each pocket (16) each conduit means being selectively aimed to direct air discharged therefrom toward the corner of the associated pocket (16), and
means (P2,N,S,23) for supplying air under pressure to said conduit means when a container is in the corner of the associated pocket.

2. A pusher mechanism according to claim 1 characterized in that each of said conduit means (30,32,34) includes a pair of vertically spaced exit holes (34) through which the air is discharged.

3. A pusher mechanism according to claim 2 characterised in that each pocket (16) comprises continuous U-shaped walls (38, 39) and the conduit means (30,32,34) includes conduits (32) defined within the walls.

4. A pusher mechanism according to claim 3, wherein the displacing means (P1,N,S,23,18,20,22;21) comprises a cylinder (20) having a moveable piston (22) and rod (18) and the conduit means (30,32,34) comprises a hole (30) extending axially through said piston and rod.

## Patentansprüche

1. Abstreifermechanismus zum Übertragen einer gewählen Anzahl von Behältern (10) von einer Heizplatte (12) einer Glasformmaschine an eine Fördereinrichtung (60), der aufweist:
einen Behälterhandhabungsarm (14), der eine entsprechende Anzahl von Taschen (16) aufweist, wobei jede eine einen Behälter ergreifende Ecke hat;
Einrichtungen (P1, N, S, 23, 18, 20, 22; 21) zum Verschieben des Behälterhandhabungsarmes (14) aus einer zurückgezogenen Position in eine vorgeschobene Behälter-aufnehmende Position und zum Verschieben des vorgeschobenen Behälterhandhabungsarmes aus der aufnehmenden Position durch einen Bogen in eine Ablageposition, bei der die Behälter an die Fördereinrichtung übertragen werden,
**dadurch gekennzeichnet**, daß
der Abstreifermechanismus aufweist:
Leitungseinrichtungen (30, 32, 34), die mit dem Behälterhandhabungsarm verschoben werden können und jeder Tasche (16) zugeordnet sind, wobei jede Leitungseinrichtung selektiv darauf abzielt, davon abgegebene Luft in Richtung der Ecke der zugeordneten Tasche (16) zu richten, und
Einrichtungen (P2, N, S, 23) zum Liefern von Luft unter Druck an die Leitungseinrichtungen, wenn ein Behälter in der Ecke der zugeordneten Tasche ist.

2. Abstreifermechanismus nach Anspruch 1, dadurch gekennzeichnet, daß jede der Leitungseinrichtungen (30, 32, 34) ein Paar vertikal beabstandeter Austrittslöcher (34) aufweist, durch die die Luft austritt.

3. Abstreifermechanismus nach Anspruch 2, dadurch gekennzeichnet, daß jede Tasche (16) kontinuierliche U-förmige Wände (38, 39) aufweist und die Leitungseinrichtungen (30, 32, 34) innerhalb der Wände definierte Leitungen (32) aufweisen.

4. Abstreifermechanismus nach Anspruch 3, bei dem die Verschiebeeinrichtungen (P1, N,. S, 23, 18, 20, 22; 21) einen Zylinder (20) mit einem bewegbaren Kolben (22) und einer Stange (18) aufweist und bei dem die Leitungseinrichtung (30, 32, 34) ein Loch (30) aufweist, das sich axial durch den Kolben und die Stange erstreckt.

## Revendications

1. Mécanisme de poussoir destiné à transférer un nombre sélectionné de récipients (10) d'une plaque d'attente (12) appartenant à une machine à mouler du verre à un transporteur (60), comprenant
un bras (14) de manipulation des récipients présentant un nombre correspondant de poches (16) dont chacune présente un angle d'appui du récipient,
des moyens (P1, M, S, 23, 18, 20, 22 ; 21) servant à déplacer ce bras (14) de manipulatior des récipients d'une position rétractée à une position avancée de réception des récipients, et à déplacer ce bras de manipulation des récipients, ainsi avancé, selon un arc, pour le faire passer de cette position avancée de réception à une position de dépose dans laquelle les récipients sont transférés au transporteur,
caractérisé en ce que le mécanisme de poussoir comprend des moyens formant conduit (30, 32, 34) qui se déplacent avec le bras de manipulation des récipients et sont associés à chaque poche (16), et en ce que chacun des moyens formant conduit est sélectivement pointé pour projeter l'air qui en est éjecté vers l'angle de la poche (16) correspondante, et
en ce que des moyens (P2, M, S, 23) servent à fournir de l'air sous pression à ces moyens formant conduit lorsqu'un récipient se trouve dans l'angle de la poche correspondante.

2. Mécanisme de poussoir selon la revendication 1, caractérisé en ce que chacun des conduits (30, 32, 34) présente deux trous de sortie (34) espacés verticalement, et au travers desquels l'air est débité.

3. Mécanisme de poussoir selon la revendication 2, caractérisé en ce que chaque poche (16) comprend des parois continues (38, 39) en forme de U et en ce que les conduits (30, 32, 34) comprennent des conduits (32) définis dans les parois.

4. Mécanisme de poussoir selon la revendication 3, dans lequel les moyens de déplacement (P1, N, S, 23, 18, 20, 22 ; 21) comprennent un cylindre (20) muni d'un piston (22) et d'une tige (18) mobiles, et en ce que les conduits (30, 32, 34) comprennent un trou (30) qui s'étend axialement à travers ce piston et cette tige.
